# EUROPÄISCHE PATENTSCHRIFT

(11) **EP 2 572 169 B1**
(45) Veröffentlichungstag und Bekanntmachung des Hinweises auf die Patenterteilung: **03.06.2020**
(21) Anmeldenummer: 11714313.1
(22) Anmeldetag: 14.04.2011
(51) Int. Cl.: G01F 1/00, G01F 1/58

(54) **VERFAHREN ZUR MESSUNG DES DURCHFLUSSES EINES MEDIUMS DURCH EIN MESSROHR, UND DURCHFLUSSMESSGERÄT**
METHOD OF MEASURING THE FLOW RATE OF A MEDIUM WITHIN A PIPE, AND FLOWMETER
PROCÉDÉ DE MESURE D'UN DÉBIT D'UN FLUIDE DANS UNE CONDUITE, ET DÉBITMÈTRE

(30) Priorität: 19.05.2010 DE 102010029119
(43) Veröffentlichungstag der Anmeldung: 27.03.2013
(73) Patentinhaber: Endress+Hauser Flowtec AG, 4153 Reinach (CH)
(72) Erfinder: DRAHM, Wolfgang, 85435 Erding (DE); RIEDER, Alfred, 84032Landshut (DE); HEIDENBLUT, Stefan, 85356 Freising (DE); SCHMALZRIED, Frank, 85467 Neuching (DE); SULZER, Thomas, 79639 Grenzach-Wyhlen (DE)
(74) Vertreter: Andres, Angelika Maria
(86) Internationale Anmeldenummer: PCT/EP2011/055948
(87) Internationale Veröffentlichungsnummer: WO 2011/144398

(56) Entgegenhaltungen:
- WO-A2-2005/012881
- DE-A1- 10 116 776
- DE-A1- 19 708 857
- DE-A1- 19 751 241
- DE-A1-102007 024 006
- JP-A- 2009 150 671
- US-A- 4 336 719
- US-A- 4 546 649
- US-A- 5 684 250

## Beschreibung

Die vorliegende Erfindung betrifft ein Durchflussmessgerät und ein Verfahren zum Ermitteln des Durchflusses eines Mediums durch ein Messrohr anhand zumindest eines ersten Messsignals, welches zumindest von der Strömungsgeschwindigkeit des Mediums im Messrohr abhängt.

Durchflussmessgeräte sind insbesondere in der Prozessmesstechnik weit verbreitet und bekannt. Beispielhaft nutzen magnetisch-induktive Durchflussmessgeräte für die volumetrische Strömungsmessung das Prinzip der elektrodynamischen Induktion aus und sind aus einer Vielzahl von Veröffentlichungen bekannt. Senkrecht zu einem Magnetfeld bewegte Ladungsträger des Mediums induzieren eine Messspannung in im Wesentlichen senkrecht zur Durchflussrichtung des Mediums und senkrecht zur Richtung des Magnetfeldes angeordneten Messelektroden. Die in die Messelektroden induzierte Messspannung ist proportional zu der über den Querschnitt des Messrohres gemittelten Strömungsgeschwindigkeit des Mediums, also proportional zum Volumenstrom. Ist die Dichte des Mediums bekannt, lässt sich der Massestrom in der Rohrleitung bzw. in dem Messrohr bestimmen. Die Messspannung wird üblicherweise über ein Messelektrodenpaar abgegriffen, das bezüglich der Koordinate entlang der Messrohrachse in dem Bereich maximaler Magnetfeldstärke angeordnet ist und wo folglich die maximale Messspannung zu erwarten ist.

Magnetisch-induktive Durchflussmessgeräte weisen dabei üblicherweise ein Messrohr aus Metall, ausgekleidet mit einem Liner aus Polymer auf. Daneben sind auch magnetisch-induktive Durchflussmessgeräte mit Messrohren aus Kunststoff bekannt. Diese können den Nachteil einer größeren und möglicherweise auch teilweise plastischen Verformung beim Überschreiten eines bestimmten Drucks des Mediums im Messrohr oder nach mehreren Druckzyklen aufweisen.

Die Druckschrift US 4 546 649 A offenbart ein Ausführungsbeispiel, in welchem ein Gurt um ein Rohr angeordnet ist, zur Ermittlung von Drücken. Dieser wird zur Ermittlung einer Druckdifferenz zwischen dem Inneren der Rohrwandung und dem Äußeren der Rohrwandung genutzt, um eine Druckverteilung im Messrohr zu ermitteln.

Die Druckschrift DE 10 2007 024 006 A1 offenbart ein Durchflussmessgerät mit aktiven und passiven Sensoren. Die aktiven Sensoren ermitteln den Durchfluss, und die passiven Sensoren ermitteln sekundäre Größen wie die Mediumstemperatur, den Druck im Messrohr (als Absolutwert) und die Umgebungstemperatur. Diese sekundären Messgrößen können zur Kompensation eines Messfehlers genutzt werden.

Die Offenlegungsschrift DE 103 47 890 A1 zeigt ein magnetisch-induktives Durchflussmessgerät mit einem Messrohr aus Schichten von Faserverbundwerkstoffen. Zwischen der Messrohrinnen- und Messrohraußenseite in diese Schichten eingebettet ist ein Dehnungsmessstreifen, um die zulässige Beanspruchung in der jeweiligen Einbausituation zu überwachen. Einen direkten Einfluss auf die Messung des Durchflusses nehmen diese nicht.

Die Druckschrift WO2005012881 A2 zeigt ein Durchflussmessgerät, bei welchem Schallwellen durch ein Medium gesendet und durch Druck- oder in einer Messrohrwandung integrierte Spannungssensoren erfasst werden.

Die Druckschrift DE19708857A1 befasst sich mit der Befestigung eines magnetisch-induktiven Messgeräts in einer Rohrleitung sowie einer Immunisierung des Messgeräts gegenüber Variationen eines magnetischen Widerstands in einer Umgebung des Messgeräts.

JP 2009 150671 A offenbart ein Durchflussmessgerät mit einem verformbaren Kunststoff-Messrohr. In einem bogenförmigen Abschnitt des Messrohrs ist ein erster Dehnungsmessstreifen angeordnet, der die vom im Messrohr fliessenden Medium erzeugten Zentrifugalkräfte erfasst, um den Massedurchfluss zu bestimmen. In einem geraden Abschnitt des Messrohrs befindet sich ein zweiter Dehnungsmessstreifen, der die Ausdehnung des Messrohrs aufgrund des statischen Drucks des Mediums erfasst. Eine Auswerteeinheit ermittelt den Massedurchfluss in Abhängigkeit der beiden Messsignale, wodurch der Einfluss des statischen Drucks des Mediums auf den Massedurchfluss erfasst und kompensiert wird. Die Aufgabe der Erfindung besteht darin, ein Durchflussmessgerät bereit zu stellen, welches robust gegenüber Druckschwankungen ist.

Die Aufgabe wird gelöst durch den Gegenstand des unabhängigen Anspruchs 1 und durch den Gegenstand des unabhängigen Anspruchs 6. Weiterbildungen und Ausgestaltungen der Erfindung finden sich in den Merkmalen der jeweils abhängigen Ansprüche wieder.

Mit einem erfindungsgemäßen Verfahren wird der Durchfluss, insbesondere der Volumen- und/oder der Massendurchfluss, eines Mediums durch ein Messrohr ermittelt. Der Durchfluss wird anhand zumindest eines ersten Messsignals ermittelt, welches zumindest von der Strömungsgeschwindigkeit des Mediums im Messrohr abhängt. Dies kann beispielsweise die Laufzeitdifferenz oder die Dopplerverschiebung bei einem Ultraschalldurchflussmessgerät, die an zwei Messelektroden abgegriffene Messspannung eines magnetisch-induktiven Durchflussmessgeräts, die Wirbelablösefrequenz eines Vortex-Durchflussmessgeräts, die Rotorendrehzahl eins Turbinen-Durchflussmessgeräts oder der Wärmeverlust eines Heizers eines thermischen Durchflussmessgeräts sein. Weitere Beispiele sind dem Fachmann bekannt, auch wie die einzelnen Messsignale von der Strömungsgeschwindigkeit des Mediums im Messrohr abhängen. Am Beispiel eines magnetisch-induktiven Durchflussmessgeräts soll hier die Abhängigkeit der Messspannung von der Strömungsgeschwindigkeit des Mediums im Messrohr kurz umrissen werden. Der Volumendurchfluss Qᵥ errechnet sich nach der Formel Qᵥ = v * A, mit v der Strömungsgeschwindigkeit und A dem Strömungsquerschnitt des Mediums im Messrohr. Dies gilt bei Messrohren deren Lumen im Querschnitt dem Strömungsquerschnitt des Mediums im Messrohr entspricht, d.h. bei voll gefüllten Messrohren. Der Strömungsquerschnitt des Mediums im Messrohr entspricht also der Durchtrittsfläche des Mediums im Bereich des Messaufnehmers. Die Strömungsgeschwindigkeit v des Mediums im Messrohr ist nun wiederum gleich dem Quotienten aus der besagten Messspannung U und dem Produkt aus Magnetfeldstärke und Abstand der Elektroden.
Fließt die Messspannung U als erstes Messsignal in die Ermittlung des Durchflusses mit ein, hängt das erste Messsignal also zumindest anteilig von der, hier mittleren, Strömungsgeschwindigkeit ab. Die Strömungsgeschwindigkeit wird in diesem Beispiel als über den Strömungsquerschnitt gemittelte Geschwindigkeit angesehen.

In der Regel finden also zusätzlich zum ersten Messsignal weitere Faktoren bei der Ermittlung des Durchflusses Berücksichtigung. So fließt auch der Strömungsquerschnitt des Mediums im Messrohr in die Ermittlung des Durchflusses mit ein. Dieser wird üblicherweise als konstant angenommen. Erfindungsgemäß jedoch, wird ein zweites Messsignal, welches vom Strömungsquerschnitt des Mediums im Messrohr abhängt und unabhängig ist von der Strömungsgeschwindigkeit des Mediums im Messrohr, erfasst.

Beispielsweise weisen die ersten und zweiten Messsignale nur einen veränderlichen Parameter auf, von dem sie abhängig sind. Sie repräsentieren sozusagen die Strömungsgeschwindigkeit bzw. den Strömungsquerschnitt bzw. sie repräsentieren eine zeitliche Änderung der Strömungsgeschwindigkeit bzw. des Strömungsquerschnitts. Die weiteren Parameter, von denen die Messsignale abhängen sind unveränderlich oder werden als unveränderlich angenommen.

Wir der Durchfluss in einer Auswerteinheit des erfindungsgemäßen Durchflussmessgeräts errechnet, findet dies nach einer vorgegebenen Vorschrift statt, insbesondere nach einer vorgegebenen Formel. Die Formel weist zumindest zwei Parameter auf, mit den Werten des ersten Messsignals als erstem Parameter und den Werten des zweiten Messsignals als zweitem Parameter. Die Messsignale würden entsprechend zu bestimmten Zeitpunkten abgetastet und der jeweils abgetastete Wert geht als Parameter in die Durchflussberechnung mit ein. In diese könnten dann auch weitere Parameter wie Druck und/oder Temperatur des Mediums einfließen. Auch weitere Messgrößen als unveränderliche oder veränderliche Parameter können berücksichtigt werden, wie z.B. die Dichte, die Viskosität, die chemische Zusammensetzung oder die Leitfähigkeit des Mediums. Sind diese Messgrößen in einem Kalibrierfaktor gespeichert, muss selbstverständlich der Kalibrierfaktor korrigiert werden, wenn sich diese zeitlich verändern.

So weist ein erfindungsgemäßes Durchflussmessgerät zum Ermitteln des Durchflusses eines durch ein Messrohr strömendes Mediums einen Messaufnehmer zur Erfassung eines ersten, von der Strömung des Messmediums im Messrohr abhängigen Messsignals und eine Auswerteeinheit zum Ermitteln des Durchflusses zumindest in Abhängigkeit des ersten Messsignals und in Abhängigkeit des Strömungsquerschnitts des Mediums im Messrohr auf, und weiterhin Mittel zum Erfassen eines weiteren, zweiten Messsignals aufweist, welches vom Strömungsquerschnitt des Mediums im Messrohr abhängt und unabhängig ist von der Strömungsgeschwindigkeit des Mediums. Der Durchfluss ist vom Durchflussmessgerät in einer vorgegebenen Form ausgebbar. Als Mittel zum Erfassen des zweiten Messsignals ist z.B. ein Dehnungsmessstreifen vorgesehen. Dieser kann auf der Außenseite des Messrohrs angebracht sein. So erfasst dieser eine geometrische Abmessung oder deren Änderung des Messrohrs auf dessen Außenseite, also der dem Lumen und damit dem Medium abgewandten Seite der Messrohrwand. Die erfasste Abmessungsänderung, beispielsweise eine Änderung des Umfangs des Messrohrs, ist über eine bekannte Vorschrift abhängig vom Querschnitt des Lumens des Messrohrs und damit abhängig vom Strömungsquerschnitt. Der Strömungsquerschnitt lässt sich somit also leicht errechnen. Es könnte sich auch einfach auf den Druck und/oder die Dichte des Mediums schließen lassen.

Alternativ zum außen am Messrohr angebrachten Dehnungsmessstreifen ist das Durchflussmessgerät beispielsweise ein magnetisch-induktives Durchflussmessgerät, z.B. mit einem Messrohr aus einem polymeren Kunststoff. Durch eine Änderung des Strömungsquerschnitts des Mediums durch das Messrohr ändert sich ebenfalls die Induktivität des Magnetsystems des magnetisch-induktiven Durchflussmessgeräts, welche gemessen und daraus das zweite Messsignal erzeugt werden kann. Ein weiteres Beispiel einer erfindungsgemäßen Ausführungsform der Mittel zur Erfassung des zweiten Messsignals besteht darin, eine Messung über akustische Oberflächenwellen (SAW) eventuell kombiniert mit einem RFID zu verwenden. Dabei werden akustische Oberflächenwellen eingesetzt, die mechansiche Spannung oder Dehnung in ein frequenzanaloges Signalumwandeln. Derartige Frequenzen liegen typischerweise im Bereich 500kHz bis 5MHz. Die Übertragung des daraus entstandenen Messsignals könnte drahtlos erfolgen, wie z.B. bei Reifendrucksensoren im Bereich einiger MHz. In diesem Ausführungsbeispiel wird das zweite Messsignal mittels akustischer Oberflächenwellen erzeugt. Weitere Mittel zum Erfassen des zweiten Messsignals stellen z.B. ein oder mehrere Wiegand-Drähte oder ein kapazitiver Entfernungsmesser dar, welche jeweils am Messrohr angeordnet sein können.

Nach der Erfassung des ersten Messsignals, welches zumindest von der Strömungsgeschwindigkeit des Mediums im Messrohr abhängt, und des zweiten Messsignals, welches vom Strömungsquerschnitt des Mediums im Messrohr abhängt und unabhängig ist von der Strömungsgeschwindigkeit des Mediums im Messrohr, wird der Durchflusses in Abhängigkeit des ersten und des zweiten Messsignals, insbesondere von einer dafür geeigneten Auswerteinheit ermittelt. Anschließend kann der Durchfluss ausgegeben werden. Als erstes Messsignal dient beispielsweise die in zumindest zwei im Messrohr angeordneten Messelektroden eines magnetisch-induktiven Durchflussmessgeräts induzierte Messspannung.

Neben dem ersten und zweiten Messsignal kann das Durchflussmessgerät weitere Messaufnehmer aufweisen, um Druck und/oder Temperatur des Mediums zu messen, wobei dann zur Ermittlung des Durchflusses des Mediums durch das Messrohr zusätzlich der Druck und/oder die Temperatur herangezogen werden.

Üblicherweise wird ein Durchflussmessgerät mit einem bekannten Lumen in einer Kalibrieranlage kalibriert. Bei der Kalibrierung werden ein Kalibrierfaktor oder mehrere Kalibrierfaktoren oder eine Kalibrierfunktion ermittelt und im Durchflussmessgerät hinterlegt, z.B. in dessen Auswerteeinheit gespeichert. Ein solcher Kalibrierfaktor ist abhängig vom Strömungsquerschnitt des Mediums im Messrohr. Mittels des zweiten Messsignals wird dieser nun korrigiert und der Durchfluss des Mediums wird durch das Messrohr mit dem korrigierten Kalibrierfaktor ermittelt.

Dies ist beispielsweise von Vorteil, wenn sich das Lumen des Messrohrs über einen gewissen Zeitraum reversibel oder irreversibel ändert, z.B. aufgrund von Druckschwankungen des Mediums im Messrohr. Erfasst werden kann eine solche Änderung z.B. dadurch, dass eine geometrische Abmessung des Messrohrs auf dessen Außenseite gemessen wird, um darüber auf den Strömungsquerschnitt des Mediums im Messrohr zu schließen. Der Strömungsquerschnitt des Mediums im Messrohr ist über eine vorgegebene Vorschrift mit der gemessenen geometrischen Abmessung des Messrohrs auf dessen Außenseite verknüpft.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
- Fig. 1: zeigt schematisch ein magnetisch-induktives Durchflussmessgerät im Querschnitt,
- Fig. 2: zeigt eine Außenwand eines Messrohrs mit erfindungsgemäßen Mitteln zur Erfassung des Strömungsquerschnitts des Mediums im Messrohr in einer ersten Ausgestaltung,
- Fig. 3: zeigt eine Außenwand eines Messrohrs mit erfindungsgemäßen Mitteln zur Erfassung des Strömungsquerschnitts des Mediums im Messrohr in einer zweiten Ausgestaltung,
- Fig. 4: zeigt eine Außenwand eines Messrohrs mit erfindungsgemäßen Mitteln zur Erfassung des Strömungsquerschnitts des Mediums im Messrohr in einer dritten Ausgestaltung,
- Fig. 5: zeigt eine Außenwand eines Messrohrs mit erfindungsgemäßen Mitteln zur Erfassung des Strömungsquerschnitts des Mediums im Messrohr in einer vierten Ausgestaltung.

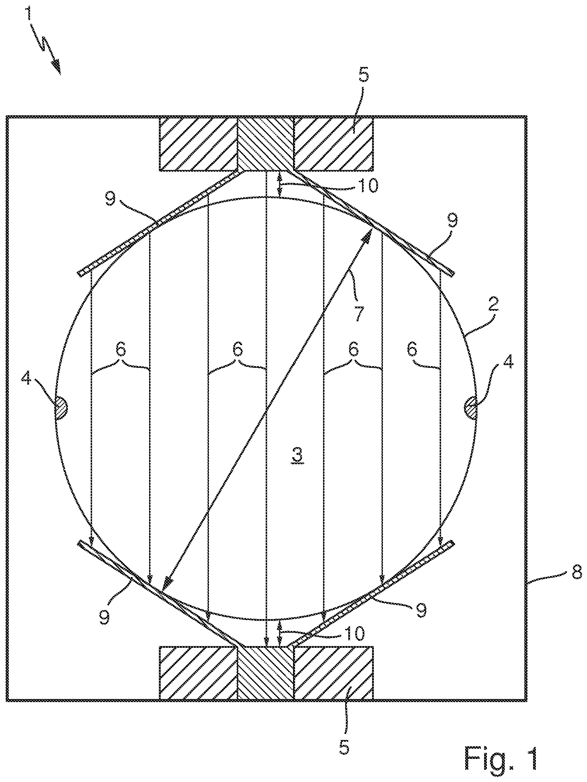

In Fig. 1 ist ein magnetisch-induktives Durchflussmessgerät 1 im Querschnitt schematisch dargestellt. In der Wand des Messrohrs 2, welches in diesem Beispiel aus einem nicht elektrisch leitfähigen Kunststoff wie z.B. PE, PET, PES, PFA, PTFE, POM, PP, PPS, PB oder PA hergestellt ist, sind zwei Messelektroden 4 eingebracht, welche das Medium 3 im Lumen des Messrohrs berühren. Da über die Erregerspulen 5 ein Magnetfeld, welches durch seine Feldlinien 6 skizziert ist, am Messrohr 2 angelegt ist, induzieren senkrecht zum Magnetfeld bewegte Ladungsträger des Mediums 3 eine Messspannung in den im Wesentlichen senkrecht zur Durchflussrichtung des Mediums 3 und senkrecht zur Richtung des Magnetfeldes angeordneten Messelektroden 4. Die in die Messelektroden 4 induzierte Messspannung ist proportional zu der über den Querschnitt des Messrohres 2 gemittelten Strömungsgeschwindigkeit des Mediums 3, also bei bekanntem Querschnitt proportional zum Volumenstrom. Die Durchflussrichtung des Mediums 3 im Messrohr 2 ist parallel zur Messrohrlängsachse. Der Querschnitt des Lumens des Messrohrs 2 entspricht bei voll gefülltem Messrohr 2 dem Strömungsquerschnitt des Mediums 3 im Messrohr 2. In diesem Ausführungsbeispiel weist das Messrohr 2 ein im Querschnitt im Wesentlichen kreisförmiges Lumen auf, weshalb der Querschnitt des Lumens des Messrohrs 2 bzw. der Strömungsquerschnitt des Mediums 3 im Messrohr 2 einfach über die Formel zur Berechnung einer Kreisfläche zu berechnen ist. Dazu muss beispielsweise der Umfang des Messrohrs 2 bekannt sein oder, wie hier angedeutet, der Innendurchmesser 7 des Messrohrs 2.

Der Innendurchmesser 7 des Messrohrs 2 wird während des Messbetriebs des magnetisch-induktiven Durchflussmessgeräts 1 beispielsweise folgendermaßen ermittelt. Um das beschriebene Messrohr 2 ist eine magnetische Rückführung 8 zum Führen des Magnetfelds angeordnet, in welchem ebenfalls die Erregerspulen 5 und die zur Magnetfeldausrichtung vorgesehenen Polbleche 9 angeordnet sind. Als magnetische Rückführung könnte auch ein entsprechend ausgestaltetes Gehäuse dienen. Die Erregerspulen 5 und die Polbleche 9 sind Teil des Erregersystems aus einem magnetischen Kreis aus weichmagnetischem Material. Zwischen den Erregersystemen unter anderem aus den jeweiligen Erregerspulen 5 und Polblechen 9 ist das Messrohr 2 angeordnet. Zwischen den jeweiligen Erregerspulen 5 und Polblechen 9 und dem Messrohr 2 bestehen nun Luftspalte 10. Die Polbleche 9 sind elastisch und können einer, insbesondere druckbedingten, Ausdehnung des Messrohrs 2 folgen. Die Erregerspulen 5 sind jedoch fest in der magnetischen Rückführung 8 untergebracht, welche nicht den Ausdehnungen des Messrohrs 2 folgt. Dadurch ändert sich die Länge der Luftspalte 10 somit die Induktivität des gesamten Magnetsystems. Aus der Änderung der Induktivität kann die Änderung des Innendurchmessers 7 des Messrohrs 2 errechnet werden. Die Induktivität wird beispielsweise bestimmt über die Messung des induktiven Widerstands des Feldsystems oder die Messung der Anstiegszeit beim Umschalten des Magnetfelds. Dieses stellt das zweite Messsignal dar. Es ist abhängig vom Strömungsquerschnitt des Mediums 3 im Messrohr 2 und unabhängig von der Strömungsgeschwindigkeit des Mediums 3 im Messrohr 2.

Ist der Innendurchmesser 7 des Messrohrs 2 bekannt, kann der Strömungsquerschnitt des Mediums 3 im Messrohr 2 leicht errechnet werden. Zusammen mit dem Spannungssignal der Messelektroden 4, als erstem Messsignal, wird daraus anschließend der Durchfluss ermittelt. Dessen Werte können anschließend von einer nicht dargestellten Auswerteeinheit, die dazu geeignet ist, ausgegeben werden. Dies kann beispielsweise über die visuelle Darstellung des Durchflusses auf einem Display geschehen, oder diskrete Durchflussmesswerte werden in digitaler Form, beispielsweise über einen Bus ausgegeben, oder ein analoges Signal, den Durchfluss repräsentierend wird per eine 4-20mA-Schnittstelle zur Verfügung gestellt. Auch kann ein Steuerungsausgang zur Steuerung von Pumpen oder Ventilen oder ähnlichem vorgesehen sein. Des Weiteren sind weitere Ausgabemöglichkeiten denkbar, wie z.B. ein akustischer oder optischer Alarm bei Über-/Unterschreiten vorgegebener Grenzwerte.

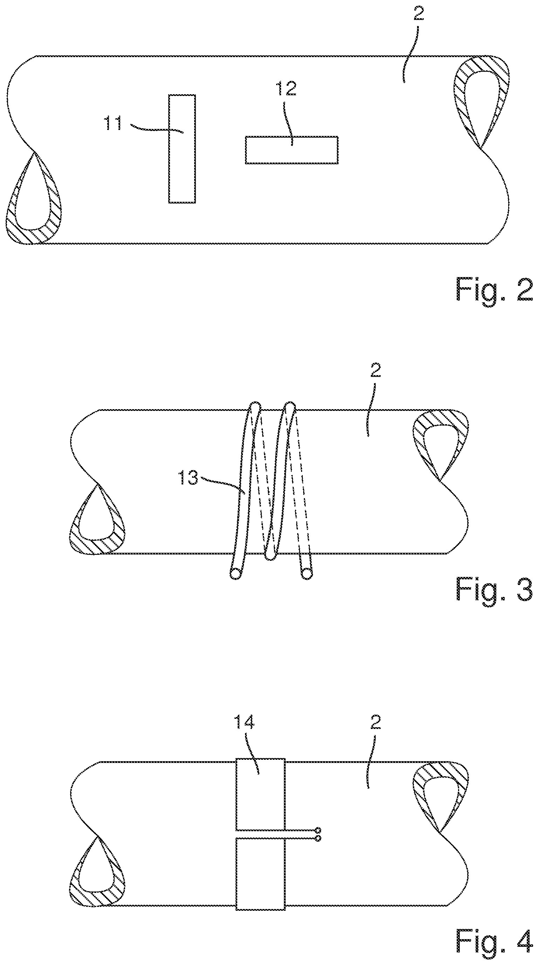

Fig. 2 zeigt ein Messrohr 2 ungeschnitten in der Seitenansicht. Auf der Außenseite des Messrohrs 2, also auf dessen Wand, welche das Lumen des Messrohrs 2 bildet, in welchem das Medium 3 strömt, sind zwei Dehnungsmessstreifen 11 und 12 angebracht. Der erste Dehnungsmessstreifen 11 ist so am Messrohr 2 angeordnet, dass er die Ausdehnung des Messrohrs 2 in radialer Richtung aufnehmen kann, der zweite Dehnungsmessstreifen 12 misst die axiale Ausdehnung des Messrohrs 2.

Mit dem ersten Dehnungsmessstreifen 11 wird also ein zweites Messsignal erzeugt, welches abhängig vom Umfang des Messrohrs 2 ist, und damit auch abhängig vom Strömungsquerschnitt des Mediums 3 im Messrohr 2, bei voll gefülltem Messrohr 2. Nicht dargestellt sind die Brückenschaltungen zu den Dehnungsmessstreifen 11 und 12. Diese sind dem Fachmann jedoch geläufig. Auch nicht näher eingegangen soll hier auf die Beziehung zwischen Querschnitt des Lumens des Messrohrs 2 bzw. Strömungsquerschnitt des Mediums 3 im Messrohr 2 und Außendurchmesser, Umfang oder weiteren geometrischen Abmessungen auf der Messrohraußenseite. Das zweite Messsignal wird hier entsprechend in Abhängigkeit einer geometrischen Abmessung auf einer Außenseite des Messrohrs erfasst. Diese ist jedoch, wie eben erläutert, abhängig vom Strömungsquerschnitt des Mediums 3 im Messrohr 2.

In der Regel werden Durchflussmessgeräte kalibriert. Dabei geht in die Ermittlung des Durchflusses, neben dem ersten Messsignal, welches von der

Strömungsgeschwindigkeit des Mediums 3 im Messrohr 2 abhängig ist, sei es bei der Messung eines Massendurchflusses oder bei der Messung des Volumendurchflusses, auch der Strömungsquerschnitt des Mediums 3 im Messrohr mit ein. Dieser geht meist über einen Kalibrierfaktor mit ein. Der Kalibrierfaktor wird beispielsweise in der Auswerteeinheit hinterlegt, z.B. in einem Speicher gehalten. Es ist auch durchaus üblich mehrere Kalibrierfaktoren zu hinterlegen oder gar die Parameter einzeln vorzuhalten, um sie gegebenenfalls leicht ändern zu können.

Wird nun erfindungsgemäß der Strömungsquerschnitt des Mediums 3 im Messrohr 2 online, also während des Messbetriebs ermittelt, bzw. ein von ihm abhängiges zweites Messsignal, wird damit der entsprechende Kalibrierfaktor online geändert bzw. korrigiert.

Zusätzlich könnten zu den ersten und zweiten Messsignalen, noch Druck und/oder Temperatur des Mediums gemessen werden und in die Ermittlung des Durchflusses des Mediums durch das Messrohr mit einfließen. Mit der erfindungsgemäßen Methode ist jedoch der Druck im Messrohr indirekt bestimmbar. Die Ausdehnung des Messrohrs 2 kann direkt oder indirekt abhängen vom Druck des Mediums 3 im Messrohr 2.

In den Fig. 3 bis Fig. 5 sind weitere Ausgestaltungsbeispiele der Erfindung veranschaulicht. Die Mittel in Fig.3 und Fig. 4 basieren auf dem gleichen Messprinzip. In Fig. 3 ist ein einzelner Draht 13 um das Messrohr 2 gewickelt. Dehnt sich das Messrohr 2 aus, wird auch der Draht 13 in seiner Länge gedehnt und sein Widerstand ändert sich entsprechend. Das daraus zu erzeugende zweite Messsignal ist somit direkt abhängig vom Umfang des Messrohrs 2 und damit indirekt vom Strömungsquerschnitt des Mediums im Messrohr 2.

Im weiteren Ausgestaltungsbeispiel der Fig. 4 ist eine robuste Metallfolie 14 um das Messrohr 2 gelegt. Sie weist gegenüber dem einzelnen Draht eine höhere Stabilität auf. Das Messprinzip ist gleich. Alternativ zur Folie könnte auch eine leitfähige Beschichtung des Messrohrs vorgesehen werden.

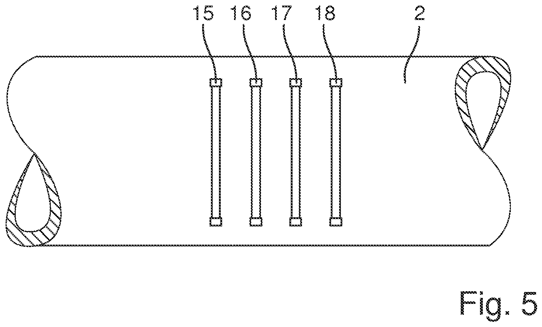

In Fig. 5 hingegen sind mehrere Drähte 15, 16, 17 und 18 mit unterschiedlichen Streckgrenzen am Messrohr 2 auf dessen Außenwand angeordnet. Diese weisen, wie angedeutet, verschiedene Drahtdurchmesser auf, oder bestehen aus unterschiedlichen Materialien. Eine Aufweitung des Messrohrs 2 führt dann schrittweise zum Abreißen der Drähte. Ihre Dimensionierung könnte z.B. so ausgestaltet sein, dass mit jedem Prozent Umfangszuwachs ein bestimmter Draht reißt. Durch Prüfung der intakten Drähte kann damit eine Aussage zum Umfangszuwachs getroffen werden. Diese Messeinrichtung ist jedoch nicht geeignet, um elastische Veränderungen des Messrohrs 2 exakt zu verfolgen, da die Drähte dann irreversibel beschädigt sind. Wird das Messrohr 2 hingegen dauerhaft, d.h. plastisch, verformt, z.B. aufgrund mehrerer Druckzyklen, kann diese Form der Berücksichtigung des Strömungsquerschnitts des Mediums im Messrohr 3 bei der Ermittlung des Durchflusses durchaus vorteilhaft sein. Insbesondere bei Kunststoffmessrohren kann es nach mehreren Druckzyklen zu Aufweitungen des Lumens des Messrohrs 2 von mehreren Prozent kommen. Dementsprechend groß wäre der Messfehler des Durchflusses ohne die erfindungsgemäße Korrektur. Nun können Dehnungsmessstreifen über einen längeren Zeitraum und über solche Längenänderungen sehr störanfällig sein, weshalb eine diskrete Erfassung des Strömungsquerschnitts vorteilhaft sein kann.

## Patentansprüche

1. Verfahren zum Ermitteln des Durchflusses eines Mediums (3) durch ein Messrohr (2)
welches aus einem elektrisch nicht-leitfähigen Kunststoff hergestellt ist,
anhand zumindest eines ersten Messsignals, welches zumindest von der Strömungsgeschwindigkeit des Mediums im Messrohr abhängt,
**gekennzeichnet durch** folgende Verfahrensschritte:
- Erfassen des ersten Messsignals,
- Erfassen eines weiteren, zweiten Messsignals, welches vom Strömungsquerschnitt des Mediums im Messrohr abhängt und unabhängig ist von der Strömungsgeschwindigkeit des Mediums im Messrohr, wobei das Erfassen des zweiten Messsignal durch zumindest ein Mittel erfolgt, welches eine Änderung der geometrischen Abmessungen des Messrohres auf dessen Außenseite erfasst,
- Ermitteln des Durchflusses in Abhängigkeit des ersten und des zweiten Messsignals,
wobei das Mittel zum Erfassen des zweiten Messsignals zumindest ein Dehnungsmessstreifen (11, 12) ist,
**dadurch gekennzeichnet, dass** ein Kalibrierfaktor, abhängig vom Strömungsquerschnitt des Mediums im
Messrohr, mittels des zweiten Messsignals korrigiert wird und der Durchfluss des Mediums durch das Messrohr mit dem korrigierten Kalibrierfaktor ermittelt wird,
wobei eine Änderung des Strömungsquerschnitts in die Ermittlung des Durchflusses einfließt.

2. Verfahren zur Messung des Durchflusses eines Mediums durch ein Messrohr nach Anspruch 1,
**dadurch gekennzeichnet,**
**dass** der ermittelte Durchfluss vom Durchflussmessgerät (1) ausgegeben wird.

3. Verfahren zur Messung des Durchflusses eines Mediums durch ein Messrohr (2) nach einem der Ansprüche 1 oder 2,
**dadurch gekennzeichnet, dass** als erstes Messsignal eine, in zumindest zwei im Messrohr angeordneten
Messelektroden (4) eines magnetisch-induktiven Durchflussmessgeräts induzierte Messspannung abgegriffen wird.

4. Verfahren zur Messung des Durchflusses eines Mediums durch ein Messrohr (2) nach einem der Ansprüche 1 bis 3,
**dadurch gekennzeichnet,**
**dass** das zweite Messsignal in Abhängigkeit einer geometrischen Abmessung auf einer Außenseite des Messrohrs erfasst wird.

5. Verfahren zur Messung des Durchflusses eines Mediums durch ein Messrohr (2) nach einem der Ansprüche 1 bis 4,
**dadurch gekennzeichnet,**
**dass** zusätzlich zu den ersten und zweiten Messsignalen, Druck und/oder Temperatur des Mediums gemessen werden und der Durchfluss des Mediums durch das Messrohr zusätzlich in Abhängigkeit des Drucks und/oder der Temperatur ermittelt wird.

6. Durchflussmessgerät (1) eingerichtet zum Ermitteln des Durchflusses eines durch ein Messrohr strömendes Medium mit einem Verfahren nach einem der vorigen Ansprüche, welches Messrohr aus einem elektrisch nichtleitfähigen Kunststoff hergestellt ist, welches Durchflussmessgerät einen Messaufnehmer zur Erfassung eines ersten, von der Strömung des Messmediums im Messrohr abhängigen Messsignals umfasst, und eine Auswerteeinheit zum Ermitteln des Durchflusses zumindest in Abhängigkeit des ersten Messsignals und in Abhängigkeit des Strömungsquerschnitts des Mediums im Messrohr (2),
wobei
das Durchflussmessgerät Mittel zum Erfassen eines weiteren, zweiten Messsignals aufweist, welches vom Strömungsquerschnitt des Mediums im Messrohr abhängt, wobei das Mittel zum Erfassen des zweiten Messsignals eine Änderung der geometrischen Abmessungen des Messrohres auf dessen Außenseite erfasst,
wobei das Mittel zum Erfassen des zweiten Messsignals zumindest ein Dehnungsmessstreifen (11, 12) ist,
**dadurch gekennzeichnet, dass** ein Kalibrierfaktor, abhängig vom Strömungsquerschnitt des Mediums im
Messrohr, mittels des zweiten Messsignals korrigierbar ist und der Durchfluss des Mediums durch das Messrohr mit dem korrigierten Kalibrierfaktor ermittelbar ist, wobei eine Änderung des Strömungsquerschnitts bei der Ermittlung des Durchflusses berücksichtigbar ist.

7. Durchflussmessgerät nach Anspruch 6,
**dadurch gekennzeichnet,**
**dass** die Auswerteeinheit des Durchflussmessgeräts geeignet ist, den errechneten Durchfluss auszugeben.

8. Durchflussmessgerät nach einem der Ansprüche 6 oder 7,
**dadurch gekennzeichnet,**
**dass** es ein magnetisch-induktives Durchflussmessgerät ist.

## Claims

1. Procedure for determining the flow of a medium (3) through a measuring tube (2), said tube being made from an electrically non-conductive plastic material,
using at least a first measuring signal, which depends at least on the flow velocity of the medium in the measuring tube,
**characterized by** the following procedural steps:
- Determination of the first measuring signal
- Determination of an additional, second measuring signal, which depends on the flow cross-section of the medium in the measuring tube and is independent of the flow velocity of the medium in the measuring tube, wherein the second measuring signal is determined using at least a means that detects a modification in the geometrical dimensions of the measuring tube on the tube's outer face,
- Determination of the flow as a function of the first and of the second measuring signal,
wherein the means for determining the second measuring signal is at least a strain gauge (11, 12),
**characterized in that** a calibration factor, as a function of the flow cross-section of the medium in the measuring tube, is corrected using the second measuring signal, and **in that** the flow of the medium through the measuring tube is determined with the corrected calibration factor,
wherein a change in the flow cross-section is taken into consideration in the determination of the flow.

2. Procedure to measure the flow of a medium through a measuring tube (2) as claimed in Claim 1,
**characterized in that**
the determined flow is output by the flowmeter (1).

3. Procedure to measure the flow of a medium through a measuring tube (2) as claimed in one of the Claims 1 or 2,
**characterized in that**
a measuring voltage induced in at least two measuring electrodes (4) arranged in the measuring tube is measured as the first measuring signal.

4. Procedure to measure the flow of a medium through a measuring tube (2) as claimed in one of the Claims 1 to 3,
**characterized in that**
the second measuring signal is determined as a function of a geometrical dimension on an outer face of the measuring tube.

5. Procedure to measure the flow of a medium through a measuring tube (2) as claimed in one of the Claims 1 to 4,
**characterized in that**
in addition to the first and second measuring signal, the pressure and/or temperature of the medium is/are also measured, and **in that** the flow of the medium through the measuring tube is also determined depending on the pressure and/or the temperature.

6. Flowmeter (1) configured to determine the flow of a medium through a measuring tube with a procedure as claimed in one of the previous claims, wherein said measuring tube is made from an electrically non-conductive plastic material, said flowmeter having a sensor to determine a first measuring signal that depends on the flow of the measured medium in the measuring tube, and an evaluation unit designed to determine the flow at least as a function of the first measuring signal and as a function of the flow cross-section of the medium in the measuring tube (2),
wherein
the flowmeter has means to determine an additional, second measuring signal, which depends on the flow cross-section of the medium in the measuring tube, wherein, in order to determine the second measuring signal, the means detects a change in the geometrical dimensions of the measuring tube on the tube's outer face,
wherein the means to determine the second measuring signal is at least a strain gauge (11, 12),
**characterized in that**
a calibration factor, as a function of the flow cross-section of the medium in the measuring tube, can be corrected using the second measuring signal, and **in that** the flow of the medium through the measuring tube can be determined with the corrected calibration factor,
wherein a change in the flow cross-section can be taken into consideration in the determination of the flow.

7. Flowmeter as claimed in Claim 6,
**characterized in that**
the evaluation unit of the flowmeter is suitable for outputting the calculated flow.

8. Flowmeter as claimed in one of the Claims 6 or 7,
**characterized in that**
the flowmeter is an electromagnetic flowmeter.

## Revendications

1. Procédé destiné à la détermination du débit d'un produit (3) à travers un tube de mesure (2), lequel tube est fabriqué à partir d'une matière plastique non conductrice électriquement,
au moyen au moins d'un premier signal de mesure, lequel dépend au moins de la vitesse d'écoulement du produit dans le tube de mesure,
**caractérisé par** les étapes de procédé suivantes :
- Détermination du premier signal de mesure
- Détermination d'un deuxième signal de mesure, lequel dépend de la section d'écoulement du produit dans le tube de mesure et est indépendant de la vitesse d'écoulement du produit dans le tube de mesure, la détermination du deuxième signal de mesure étant réalisée à l'aide d'au moins un moyen, lequel détecte une modification des dimensions géométriques du tube de mesure sur la face extérieure de ce dernier,
- Détermination du débit en fonction du premier et du deuxième signal de mesure, le moyen destiné à la détermination du deuxième signal de mesure étant au moins une jauge de contrainte (11, 12),
**caractérisé en ce qu'**un facteur d'étalonnage est corrigé, en fonction de la section d'écoulement du produit dans le tube de mesure, à l'aide du deuxième signal de mesure, et **en ce que** le débit du produit à travers le tube de mesure est déterminé avec le facteur d'étalonnage corrigé,
une modification de la section d'écoulement étant considérée pour la détermination du débit.

2. Procédé destiné à la mesure du débit d'un produit à travers un tube de mesure (2) selon la revendication 1,
**caractérisé**
**en ce que** le débit déterminé par le débitmètre (1) est délivré.

3. Procédé destiné à la mesure du débit d'un produit à travers un tube de mesure (2) selon l'une des revendications 1 ou 2,
**caractérisé**
**en ce qu'**une tension de mesure induite est prélevée, en tant que premier signal de mesure, dans au moins deux électrodes de mesure (4) d'un débitmètre magnéto-inductif, lesquelles électrodes sont disposées dans le tube de mesure.

4. Procédé destiné à la mesure du débit d'un produit à travers un tube de mesure (2) selon l'une des revendications 1 à 3,
**caractérisé**
**en ce que** le deuxième signal de mesure est déterminé en fonction d'une dimension géométrique sur une face extérieure du tube de mesure.

5. Procédé destiné à la mesure du débit d'un produit à travers un tube de mesure (2) selon l'une des revendications 1 à 4,
**caractérisé**
**en ce que** sont mesurées, en plus du premier et du deuxième signal de mesure, également la pression et/ou la température du produit, et **en ce que** le débit du produit à travers le tube de mesure est en plus déterminé en fonction de la pression et/ou de la température.

6. Débitmètre (1) configuré pour la détermination du débit d'un produit s'écoulant à travers un tube de mesure avec un procédé selon l'une des revendications précédentes, lequel tube de mesure est fabriqué à partir d'une matière plastique non conductrice électriquement, lequel débitmètre comprend un capteur destiné à la détermination d'un premier signal de mesure dépendant de l'écoulement du produit mesuré dans le tube de mesure, et une unité d'exploitation destinée à la détermination du débit au moins en fonction du premier signal de mesure et en fonction de la section d'écoulement du produit dans le tube de mesure (2),
le débitmètre comprenant un moyen destiné à la détermination d'un deuxième signal de mesure, lequel dépend de la section d'écoulement du produit dans le tube de mesure, le moyen détectant, en vue de la détermination du deuxième signal de mesure, une modification des dimensions géométriques du tube de mesure sur la face extérieure de ce dernier,
le moyen destiné à la détermination du deuxième signal de mesure étant au minimum une jauge de contrainte (11, 12),
**caractérisé**
**en ce que** peut être corrigé un facteur d'étalonnage, en fonction de la section d'écoulement du produit dans le tube de mesure, au moyen du deuxième signal de mesure, et **en ce que** le débit du produit à travers le tube de mesure peut être déterminé à l'aide du facteur d'étalonnage corrigé,
une modification de la section d'écoulement pouvant être prise en compte lors de la détermination du débit.

7. Débitmètre selon la revendication 6,
**caractérisé**
**en ce que** l'unité d'exploitation du débitmètre est capable de délivrer le débit calculé.

8. Débitmètre selon l'une des revendications 6 ou 7,
**caractérisé**
**en ce que** le débitmètre est un débitmètre magnéto-inductif.
